# EUROPÄISCHE PATENTSCHRIFT

(11) **EP 3 835 989 B1**
(45) Veröffentlichungstag und Bekanntmachung des Hinweises auf die Patenterteilung: **03.09.2025**
(21) Anmeldenummer: 19215394.8
(22) Anmeldetag: 11.12.2019
(51) Int. Cl.: G06F 21/62, G06F 21/60, H04L 9/40

(54) **VERFAHREN UND SYSTEM ZUM TEILEN VON DATEN**
METHOD AND SYSTEM FOR SHARING DATA
PROCÉDÉ ET SYSTÈME DE PARTAGE DE DONNÉES

(43) Veröffentlichungstag der Anmeldung: 16.06.2021
(73) Patentinhaber: ise Individuelle Software und Elektronik GmbH, 26122 Oldenburg (DE)
(72) Erfinder: SAHM, Christoph, 26131 Oldenburg (DE)
(74) Vertreter: Angerhausen, Christoph

(56) Entgegenhaltungen:
- US-A1- 2005 071 632
- US-A1- 2010 257 351

## Beschreibung

### GEBIET

Die vorliegende Patentanmeldung bezieht sich auf Verfahren und Systeme zum Anonymisieren von Daten, insbesondere zu dem Zweck, zentral gesammelte Daten vor dem Zugriff durch Dritte zu schützen.

### HINTERGRUND

Hersteller bestimmter Computermodule, also von Software- oder Hardwarekomponenten, interessieren sich zunehmend für Nutzungsdaten ihrer Anwender, beispielsweise um zu ermitteln, welche Komponenten besonders häufig benutzt werden. Bislang werden solche Daten mit Zustimmung durch den Anwender direkt von der Komponente an den Hersteller gesendet. Einer zentralisierten Erfassung solcher Daten für mehrere Anwender und unterschiedliche Hersteller steht bislang entgegen, dass das Zusammenführen der Daten diese Daten bestimmten Parteien zugänglich machen würde, für die sie nicht bestimmt sind.

US 2010/0257351 A1 offenbart Verschlüsseln von ersten Daten einer ersten Gruppe mit ersten Schlüsseln sowie Verschlüsseln zweiter Daten einer zweiten Gruppe mit zweiten Schlüsseln. Alle Gruppen gehören der gleichen "Organisation" an, und Bezeichner werden verwendet, um Daten Schlüsseln zuzuordnen. Die US 2005/071632 A1 offenbart einen weiteren Stand der Technik.

### ZUSAMMENFASSUNG

Der hier offenbarten Erfindung liegt die Aufgabe zugrunde, eine sichere und zentrale Erfassung von Nutzungsdaten zu ermöglichen.

Die Erfindung ist in den Ansprüchen definiert.

Ausführungsformen der Erfindung betreffen ein System, umfassend: Einen Server, eine Datenbank und wenigstens einen Client; wobei auf der Datenbank ein oder mehrere Schlüssel gespeichert sind, die einem jeweiligen Anbieter eines jeweiligen Moduls zugeordnet sind, das in oder an dem Client Daten verarbeitet; wobei der Client eingerichtet ist: Daten, die durch ein Modul in oder an dem Client erzeugt werden, mit einem ersten Schlüssel, der dem Client zugeordnet ist, als erste Daten zu verschlüsseln, wobei das Modul einem der Anbieter zugeordnet ist; auf die Datenbank zuzugreifen und einen zweiten Schlüssel auszulesen, der dem Anbieter zugeordnet ist, und die Daten mit dem zweiten Schlüssel als zweite Daten zu verschlüsseln; und die ersten und zweiten Daten an den Server zu senden; und wobei der Server eingerichtet ist: die ersten und zweiten Daten zu speichern, wobei die ersten Daten dem Client zugeordnet werden, und wobei die zweiten Daten dem Anbieter des Moduls zugeordnet werden.

Insbesondere kann der Server eingerichtet sein, auf eine Anforderung eines der Anbieter sämtliche Daten, die dem Anbieter zugeordnet sind, nachzuschlagen und an den Anbieter zu senden.

Vorteilhafterweise ist der Client ferner eingerichtet, neben den ersten und zweiten Daten eine Email-Adresse eines Anwenders des Moduls zu senden, und ist der Server eingerichtet, die ersten und zweiten Daten auch unter der Email-Adresse zu speichern.

In einer weiteren Ausführungsform ist der Server ferner eingerichtet, auf eine Anforderung des Moduls oder des Anwenders sämtliche erste und zweite Daten, die unter der Email-Adresse gespeichert sind, vollständig anzuzeigen oder ganz oder teilweise zu löschen.

Diese Anforderung enthält vorzugsweise die Email-Adresse des Anwenders.

Vorteilhafterweise ist der Server ferner eingerichtet, auf eine Anforderung eines Moduls oder Anwenders sämtliche Daten, die dem Client zugeordnet sind, zu löschen.

In weiteren Ausführungsformen ist der Server ferner eingerichtet, vor oder nach dem Speichern der ersten und zweiten Daten einen Bezeichner an den Client zu übermitteln, wobei die Anforderung diesen Bezeichner enthält.

Ausführungsformen der Erfindung betreffen ferner ein Verfahren, umfassend: Verschlüsseln, durch einen Client, von Daten, die durch eines Moduls in oder an dem Client erzeugt werden, mit einem ersten Schlüssel, der dem Client zugeordnet ist, als erste Daten, wobei das Modul einem von mehreren Anbietern zugeordnet ist; Zugreifen, durch den Client, auf eine Datenbank, auf der ein oder mehrere Schlüssel gespeichert sind, die den Anbietern zugeordnet sind, und Verschlüsseln der Daten mit den zweiten Schlüssel als zweite Daten; Senden, durch den Client, der ersten und zweiten Daten an einen Server; und Speichern, durch den Server, der ersten und zweiten Daten, wobei die ersten Daten dem Client zugeordnet werden, und wobei die zweiten Daten dem Anbieter dieses Modul zugeordnet werden.

Insbesondere umfasst das Verfahren ferner Nachschlagen, durch den Server auf eine Anforderung eines der Anbieter, sämtlicher zweiter Daten, die dem Anbieter zugeordnet sind, und Senden der zweiten Daten an den Anbieter.

Ausführungsformen der Erfindung umfassen außerdem, dass das Senden der ersten und zweiten Daten durch den Client ferner Senden einer Email-Adresse eines Anwenders des Moduls umfasst, wobei das Speichern der ersten und zweiten Daten durch den Server ferner Speichern der ersten und zweiten Daten unter der Email-Adresse umfasst.

Vorteilhafterweise umfasst das Verfahren ferner Löschen, durch den Server auf eine Anforderung eines Moduls oder Anwenders, von sämtlichen ersten und zweiten Daten, die dem Client zugeordnet sind.

Insbesondere enthält die Anforderung die Email-Adresse des Anwenders.

In bestimmten Ausführungsformen umfasst das Verfahren ferner Löschen, durch den Server auf eine Anforderung des Moduls oder des Anwenders, von sämtlichen ersten und zweiten Daten, die unter der Email-Adresse gespeichert sind.

Gemäß einer weiteren Ausführungsform übermittelt der Server vor oder nach dem Speichern der ersten und zweiten Daten einen Bezeichner an den Client, wobei die zweiten Daten dem Anbieter des Moduls zugeordnet werden.

Ausführungsformen der Erfindung betreffen weiter ein computerlesbares Medium mit darauf gespeicherten Anweisungen, die, wenn sie durch einen Client und/oder einen Server ausgeführt werden, eines der vorstehenden Verfahren durchführen.

### KURZE BESCHREIBUNG DER ZEICHNUNGEN

Figur 1 zeigt ein System gemäß einer Ausführungsform der Erfindung.
Figur 2 zeigt ein Verfahren gemäß einer Ausführungsform der Erfindung.

### AUSFÜHRLICHE BESCHREIBUNG

Die Erfindung umfasst ein System, bestehend aus einem Server, einem Client und einer Datenbank. Server und Client sind vorzugsweise separate Computer, einschließlich Notebook, PC, Mobiltelefon. Alternativ kann der Server und/oder der Client auch als Software ausgebildet sein; der Begriff "Server-Client-Architektur" umfasst Softwareprogramme, die miteinander kommunizieren. Sind Server und/oder Client als Software ausgebildet, können sie auf dem gleichen Gerät ablaufen, und kommunizieren beispielsweise über eine oder mehrere gemeinsame Schnittstellen. Sind Server und Client als separate Geräte ausgebildet, kommunizieren sie beispielsweise über eine Netzwerkverbindung. Es können mehrere Clients vorgesehen sein. Die Datenbank kann auf dem gleichen Gerät wie der Server und/oder dem Client eingerichtet sein. Alternativ kann die Datenbank auf einem weiteren Gerät vorliegen. Die Datenbank ist zur Kommunikation mit dem oder den Clients eingerichtet, beispielsweise über eine gemeinsame lokale Schnittstelle oder eine Netzwerkverbindung.

Im Folgenden wird beispielhaft ein einzelner Client erläutert. Jedoch umfasst die Erfindung auch Ausführungsformen mit einer beliebigen Anzahl von Clients.

Auf dem erfindungsgemäßen Client sind ein oder mehrere Module installiert. Die Module können Softwarekomponenten und/oder Hardwarekomponenten umfassen. Beispiele für eine Softwarekomponente sind Anwendungen, Treiberprogramme, Betriebssysteme, virtuelle Maschinen. Beispiele für eine Hardwarekomponente sind Mikrocontroller, Grafikkarten und Prozessoren in einem Client, sowie Hardwareeinheiten mit integrierten Prozessor, die an einen Client angeschlossen sind.

Die Module können unabhängig voneinander Daten verarbeiten. Alternativ kann ein Modul Bestandteil von einem oder mehreren weiteren Modulen in oder an dem Client sein. Insbesondere können unterschiedliche Module von unterschiedlichen Herstellern, hier auch als Anbieter bezeichnet, stammen. Ein Modul, das Bestandteil eines anderen Moduls ist, kann ebenfalls von einem anderen Anbieter stammen als dasjenige Modul, dessen Bestandteil es ist. Ein Modul kann Bestandteil eines anderen Moduls sein, indem es beispielsweise als in oder an dem anderen Modul zur Verfügung gestellt wird. Alternativ kann ein solcher Bestandteil jedoch auch fest in das andere Modul eingebunden sein, beispielsweise als kompilierter nativer Code, oder als Bytecode.

Module auf dem Client erfassen und erzeugen Daten. Diese Daten enthalten beispielsweise Nutzungsdaten, hier auch als Anwendungsdaten bezeichnet. Insbesondere können die Daten angeben, dass das betreffende Modul verwendet wurde, etwa durch den Anwender oder durch eine andere Instanz, beispielsweise ein weiteres Modul. Die Daten können auch Angaben darüber enthalten, wann, durch wen oder an welchem geographischen Ort das Modul verwendet wurde, welche Funktion des Moduls aufgerufen wurde, wie lange dessen Anwendung dauerte, welches Modul zuvor verwendet wurde, von welchem Hersteller das Modul stammt, und dergleichen. Die Daten können vollständig automatisch oder auch durch explizite Interaktion mit einem Anwender erstellt werden; beispielsweise können die Daten einen Kommentar des Anwenders zur Verwendung eines Moduls enthalten. Zur Eingabe und Bearbeitung solcher Kommentare kann die Erfindung eine App umfassen, die dem Anwender eine grafische Oberfläche zum Eintragen und Verschlüsseln sowie Versenden seines Kommentars zur Verfügung stellt. Eine solche App könnte separat von Anbietern bereitgestellt werden; alternativ kann eine App dazu dienen, Kommentare für mehrere Anbieter beziehungsweise deren Module einzusenden.

Der Client ist ferner eingerichtet, die durch ein Modul erfassten oder erzeugten Daten zu verschlüsseln. Zu diesem Zweck ist der Client eingerichtet, von der Datenbank einen Schlüssel zu laden.

Im Folgenden wird zwischen Schlüsseln von Anbietern und dem Schlüssel eines Clients unterschieden. Jedoch umfassen Ausführungsformen der Erfindung auch die Möglichkeit, Schlüssel nicht einem Client, sondern einem Anwender zuzuordnen. Auf diese Weise kann ein Anwender unabhängig von dem jeweiligen Client, den er bedient, auf seine Daten im Server zugreifen.

Die Datenbank verfügt über einen oder mehrere Schlüssel, die jeweils einem Anbieter zugeordnet sind, und die anhand des jeweiligen Anbieters nachgeschlagen werden können. Dies kann beispielsweise durch eindeutige Bezeichner der Anbieter implementiert werden; durch Angabe eines Bezeichners kann aus der Datenbank der zugehörige Schlüssel gelesen werden. Vorzugsweise verwendet die Erfindung asymmetrische Verschlüsselung; die in der Datenbank enthaltenen Schlüssel sind dann öffentliche Schlüssel, und die entsprechenden privaten Schlüssel liegen bei dem jeweiligen Anbieter, dem ein öffentlicher Schlüssel zugeordnet ist. Alternativ kann die Erfindung auch mit symmetrischen Schlüsseln implementiert werden. In diesem Fall kann sowohl das Nachschlagen von Schlüsseln in der Datenbank als auch das Nachschlagen erster und zweiter Daten auf dem Server die Angabe eines Passworts erfordern. Ein solches Passwort kann etwa durch einen Anmeldevorgang des Clients oder Anwenders beziehungsweise des Anbieters bei der Datenbank festgesetzt werden.

Nach Erhalt des Schlüssels wird dieser von dem Client verwendet, um die Daten zu verschlüsseln und die verschlüsselten Daten an den Server zu senden. Der Server ist eingerichtet, die verschlüsselten Daten dem Anbieter demjenigen Modul zuzuordnen, das die zugrundeliegenden Daten im Client erzeugte. Dies kann beispielsweise durch eine Tabelle implementiert werden, die die verschlüsselten Daten auf den Anbieter abbildet, beispielsweise durch Verwendung des bereits erläuterten Bezeichners des Anbieters. Diesen Bezeichner kann der Server entweder von dem Client bei Übersendung der verschlüsselten Daten erhalten oder aus einer Benennung der verschlüsselten Daten ermitteln. Es können die gleichen Bezeichner wie in der obigen Datenbank verwendet werden; alternativ kann der Server eigene Bezeichner für die Anbieter verwenden. In jedem Fall sind diese Bezeichner den jeweiligen Anbietern bekannt und können im Wege eines Anmeldeverfahrens für Anbieter am Server festgesetzt werden. Anbieter können mit dem Server in Kontakt treten, beispielsweise mittels einer Schnittstelle wie etwa HTTP oder über eine App, und können unter Angabe ihres Bezeichners sämtliche verschlüsselte Daten aus dem Server lesen, die diesem Bezeichner zugeordnet sind.

In Ausführungsformen mit asymmetrischer Verschlüsselung ist der Anbieter im Besitz des privaten Schlüssels und kann sämtliche aus dem Server gelesene verschlüsselte Daten entschlüsseln. Da der Anbieter nicht über weitere Bezeichner verfügt, kann er diejenigen verschlüsselten Daten, die von Modulen anderer Anbieter erzeugt wurden, nicht auslesen. Selbst wenn er diese Bezeichner kennt, kann er die verschlüsselten Daten anderer Module zwar auslesen, ist jedoch mangels des passenden privaten Schlüssels nicht in der Lage diese zu entschlüsseln.

In Ausführungsformen mit symmetrischer Verschlüsselung kann der Anbieter, soweit er den Schlüssel nicht ohnehin besitzt, diesen aus der Datenbank anhand seines Bezeichners auslesen, beispielsweise in Verbindung mit einer Authentifizierungsmaßnahme, insbesondere Angabe eines Passworts.

Die auf dem Client durch Module erzeugten Daten können, alternativ oder zusätzlich zu dem oben beschriebenen Verschlüsseln und Versenden, durch einen Schlüssel verschlüsselt werden, der dem Client zugeordnet ist und nicht dem Anbieter, und werden dann ebenfalls an den Server gesendet. Anders als bei dem Verschlüsseln mit Schlüsseln der Anbieter wird der Schlüssel des Clients nicht aus der Datenbank abgerufen, sondern steht dem Client lokal zur Verfügung. Der Client verschlüsselt mit diesem Schlüssel die erzeugten Daten und sendet sie an den Server, wo sie gespeichert werden. Der Server speichert die verschlüsselten Daten in Verbindung mit einem Bezeichner, der dem Client zugeordnet ist. Dieser Bezeichner kann entweder durch den Server anhand der Herkunft des Clients - beispielsweise dessen IP-Adresse oder Hostnamen - oder durch einen von dem Client ebenfalls versendeten Bezeichner ermittelt werden. Der Bezeichner kann auch eine Email-Adresse sein. Als weitere Alternative gibt nicht der Client oder Anwender den Bezeichner an, sondern erhält diesen beim ersten Zugriff auf den Server; der Bezeichner kann dann für weitere Zugriffe auf die gespeicherten Daten verwendet werden, beispielsweise zum Löschen der Daten oder zum Speichern weiterer Daten für diesen Client oder Anwender. Diese Maßnahmen ermöglichen dem Client, die durch ihn versendeten Daten wieder von dem Server abzurufen, etwa unter Angabe des genannten Bezeichners. Auf diesem Weg kann der Client sämtliche verschlüsselten Daten abrufen, die von ihm versendet wurden.

Vorteilhafterweise werden von Modulen erzeugte Daten immer sowohl mit einem Schlüssel des jeweiligen Anbieters als auch mit einem Schlüssel des Clients verschlüsselt und versendet, so dass der Server erste und zweite Daten erhält, die mit jeweils einem Schlüssel verschlüsselt sind. Auf diese Weise können sowohl Anbieter als auch Clients auf diejenigen Daten des Servers zugreifen, die sie betreffen, während andere Parteien von solchem Zugriff ausgeschlossen sind. Außerdem wird sichergestellt, dass der Inhalt der ersten und zweiten Daten abgesehen von ihrer Verschlüsselung identisch sind.

Werden die Daten im Client aufgrund eines Anwenderbefehls erzeugt, bietet die Erfindung den Vorteil, dass die Daten jeweils einmal für den Client und einmal für den oder die betreffenden Anbieter verschlüsselt, versendet und im Server abgelegt werden, ohne dass sich der Anwender um die Schlüssel, die Verschlüsselungsvorgänge und das Versenden zu kümmern braucht. Somit ermöglicht die Erfindung aufgrund einer einzigen Anwenderaktion, Daten auf dem Server abzulegen und sie sowohl für den Anbieter als auch für den Client zugreifbar zu machen, nicht jedoch für andere Anbieter, andere Clients oder weitere Parteien. Insbesondere ist der Server selbst von einer Entschlüsselung ausgeschlossen, da ihm die Schlüssel nicht zugänglich sind.

Indem Module, die in oder an Clients ablaufen, wiederholt verschlüsselte Daten mit entsprechenden Anbieter-Bezeichnern auf dem Server ablegen, wird auf diesem eine Datenbasis gebildet, die von den entsprechenden Anbietern abgerufen und für die Analyse der Verwendung ihrer Module verwendet werden können. Zum Abrufen können Anbieter einfach ihren Anbieter-Bezeichner angeben und erhalten dann sämtliche Daten, die unter diesem Bezeichner abgelegt wurden. Auch die Clients beziehungsweise deren Anwender können unter Angabe ihres Bezeichners die ihnen zugeordneten Daten nachschlagen. Sowohl Anbieter als auch Clients oder Anwender können auch Daten auf dem Server löschen. Hierzu wird ebenfalls der Bezeichner angegeben sowie eine Aufforderung zum Löschen; diese kann beispielsweise in Form einer Datenbankoperation erfolgen oder unter einem vorab definierten anderweitigen Befehl. Eine derartige Löschoperation kann optional die Angabe eines Passworts erfordern, beispielsweise ein Passwort, das zwischen der löschenden Partei und dem Server im Wege eines Anmeldeverfahrens definiert wurde. Ein Client oder Anwender erhält somit die Möglichkeit, sämtliche Daten, die unter dem betreffenden Bezeichner gespeichert sind, zu löschen. Da diese Daten parallel unter Bezeichnern der Anbieter gespeichert wurden, unterliegen sie nicht automatisch der Löschung. Jedoch kann vorgesehen sein, dass beim Ablegen der ersten und zweiten Daten auch die zweiten Daten mit dem Bezeichner der ersten Daten versehen werden. In dieser Ausführungsform betrifft die Löschoperation sämtliche erste und zweite Daten, die auf den betreffenden Client beziehungsweise Anwender zurückgehen. Auf diese Weise ermöglicht die Erfindung den Anwendern ein optimale Kontrolle über ihre Daten.

Jeder Anbieter kann unter Angabe seines Bezeichners sämtliche Daten einsehen, die im Server für Module dieses Anbieters abgelegt wurden. Diese Daten eignen sich für eine Analyse der Verwendung dieser Module. Beispielsweise kann aus den Kommentaren der Anwender zu einzelnen Modulen eine qualitative Beurteilung der Softwarekomponenten erstellt werden. Sofern die abgelegten Daten automatisiert abgelegt wurden und etwa Nutzungsdauern und technische Angaben über Clients enthalten, kann eine Statistik über die Benutzung einzelner Module erstellt werden. Eine solche Statistik kann etwa angeben, welche Funktionen eines Moduls häufig aufgerufen wurden, wie lange die Funktionen genutzt wurden, etc. Anbieter können dadurch ihre Produkte anpassen und beispielsweise wenig genutzte Funktionen entfernen und häufig genutzte Funktionen bevorzugt entwickeln.

Optional kann ein Teil der Daten auf dem Server in unverschlüsselter Form vorliegen. Diese Daten können beispielsweise Angaben über vorliegende Versionen von Daten enthalten, insbesondere die konkreten Versionsnummern und Zeitpunkte der Veröffentlichung jeweiliger Daten auf dem Server. In einer solchen Ausführungsform liegen die konkreten Daten, die durch die Versionsnummern bezeichnet werden, weiterhin verschlüsselt vor. Unverschlüsselte Versionsdaten können Verwendung finden zum Erzeugen einer grafischen Benutzeroberfläche, beispielsweise auf dem Server und als Antwort auf eine entsprechende Anfrage, beispielsweise per HTTP. Eine solche Benutzeroberfläche kann unter Zugriff auf die Versionsdaten eine Darstellung der Zeitpunkte und Versionsnummern jeweiliger Änderungen an den (verschlüsselten) Daten anzeigen und diese Daten per Link zur Verfügung stellen. Bei Auswahl einer solchen angezeigten Version in der Benutzeroberfläche durch einen Anwender können die Daten dieser Version mit einem der oben beschriebenen Maßnahmen entschlüsselt und angezeigt werden.

Wie aus den bisher beschriebenen Ausführungsformen ersichtlich, kann ein Client oder Anwender auf von ihm im Server eingestellte Daten unter Angabe eines ihnen zugeordneten Bezeichners zugreifen; wie bereits erläutert, ist diesem Bezeichner ein Schlüssel zugeordnet, der angewendet wird, um die Daten für jeweiligen Anwender bereitzustellen. Anwender können das Recht zum Zugriff auf ihre Daten an andere Anwender weitergeben, indem sie ihnen ihren Bezeichner mitteilen. Dies kann beispielsweise mittels Email oder auf anderem Weg erfolgen. Alternativ kann an Anwender seinen eigenen Schlüssel an andere weitergeben, um diese in die Lage zu versetzen, seine Daten vom Server anzufordern.

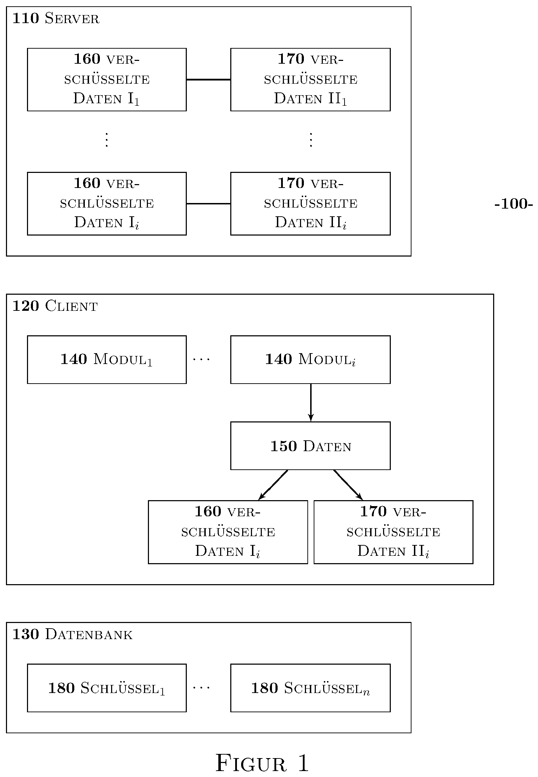

Figur 1 zeigt ein erfindungsgemäßes System 100. Das System 100 umfasst einen Server 110, einen Client 120 und eine Datenbank 130.

Der Client 120 enthält ein oder mehrere Module 140, hier als Module 1 bis i dargestellt. Jedes dieser Module 140 kann Daten 150 erzeugen oder erfassen. Diese sollen beispielsweise Anbietern des betreffenden Moduls zugänglich gemacht werden.

In der gezeigten Ausführungsform werden die Daten 150 eines Moduls, hier die Daten des Moduls i, je einmal verschlüsselt, um verschlüsselte Daten 160 und verschlüsselte Daten 170 zu erhalten. Die verschlüsselten Daten 160 werden mithilfe eines Schlüssels des Clients 120 erzeugt; der Schlüssel ist beispielsweise lokal auf dem Client abgelegt. Dieser Schlüssel wird für jedes der Module auf diesem Client verwendet. Es handelt sich beispielsweise um einen öffentlichen Schlüssel des Clients. Alternativ ist der Schlüssel nicht dem Client, sondern einem auf dem Client eingeloggten Anwender zugeordnet, und wird für jedes der Module verwendet, die unter einem Benutzerkonto dieses Anwenders ablaufen beziehungsweise auf die von diesem Benutzerkonto aus zugegriffen wird.

Die verschlüsselten Daten 170 werden mithilfe eines Schlüssels erzeugt, der einem Anbieter dieses Moduls zugeordnet ist. In der hier gezeigten Ausführungsform wird der Schlüssel jedoch von einer Datenbank 130 abgerufen. Jedoch kann der Schlüssel alternativ in dem Modul und/oder durch dieses bereitgestellt werden, und braucht nicht nachgeschlagen zu werden.

Die Datenbank 130 enthält eine Liste von Schlüsseln 180, die jeweiligen Anbietern 1 bis n zugeordnet sind. Durch Angabe eines Bezeichners für einen Anbieter kann der betreffende Schlüssel ausgelesen werden. Der Client kann diesen Bezeichner beispielsweise von dem Modul abfragen. Alternativ kann der Client an die Datenbank den Namen des installierten Moduls übergeben; die Datenbank kann in einer solchen Ausführungsform Namen von Modulen auf Bezeichner von Anbietern und diese wiederum auf die jeweiligen Schlüssel abbilden. Es handelt sich bei den Schlüsseln in der Datenbank insbesondere um öffentliche Schlüssel, so dass eine Authentifizierung des Clients bei der Datenbank nicht erforderlich ist.

Die verschlüsselten Daten 160 und 170 werden von dem Client an den Server 110 gesendet. Die verschlüsselten Daten 160 werden im Server in Verbindung mit einem Bezeichner des Clients abgelegt, so dass sie unter diesem Bezeichner abgerufen werden können. Der Bezeichner kann beispielsweise von dem Client selbst mit den verschlüsselten Daten 160 übersendet werden, oder kann von dem Server anhand einer Adresse oder eines Namens des Clients beziehungsweise des Anwenders bestimmt werden. Die verschlüsselten Daten 170 werden im Server in Verbindung mit einem Bezeichner des betreffenden Anbieters abgelegt, so dass sie unter diesem Bezeichner abgerufen werden können. Der Bezeichner wird von dem Client mit den verschlüsselten Daten 170 übersendet. Optional kann der Server die verschlüsselten Daten 170 zusätzlich mit dem Bezeichner des Clients beziehungsweise des Anwenders ablegen. In dieser Ausführungsform kann ein Anbieter unter Angabe seines Bezeichners und des Bezeichners des Clients oder Anwenders sämtliche Daten aus dem Server lesen, die sowohl den Anbieter als auch diesen Client oder Anwender betreffen. Wird lediglich der Bezeichner des Anbieters mit dem verschlüsselten Daten 170 abgelegt, kann der Anbieter sämtliche Daten aus dem Server 110 lesen, die ihn betreffen, und kann somit sämtliche Daten aller seiner Module für alle Clients oder Anwender einsehen.

Die Erfindung ermöglicht damit, Daten von Modulen für deren Anbieter und auch für den Client oder Anwender zentral zugänglich zu machen. Andere Parteien, insbesondere andere Anbieter und Clients und auch der Server selbst, sind von einem derartigem Zugriff ausgeschlossen, da sie nicht über die entsprechenden Schlüssel verfügen. Der Zugriff auf Daten im Server ist für Clients und Anbieter besonders bequem, da lediglich die Angabe eines Bezeichners des Clients beziehungsweise Anbieters erforderlich ist, um sämtliche Daten des Clients beziehungsweise Anbieters abzurufen. Die parallele Verschlüsselung mit jeweiligen Schlüsseln im Client bleibt für Anwender des Clients unsichtbar; sie können aufgrund dieser parallelen Verschlüsselung jedoch auf einfache Weise ihre Daten im Server einsehen. Die Erfindung ermöglicht Anwendern eine bequeme Kontrolle der Daten, die den Anbietern zugänglich gemacht wird, und ermöglicht den Anbietern, die Verwendung ihrer Module zu verfolgen.

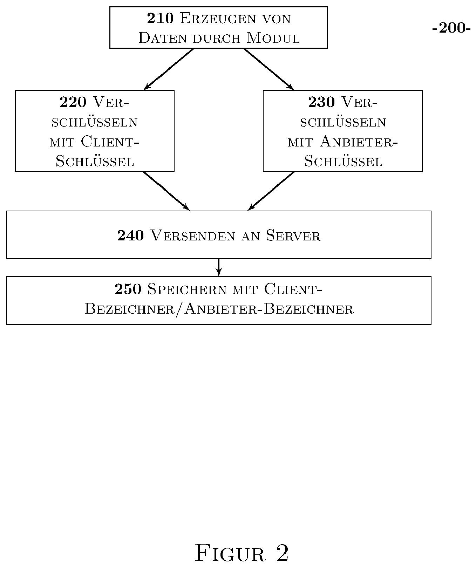

Figur 2 zeigt ein computer-implementiertes Verfahren 200 gemäß einer Ausführungsform der Erfindung. Das Verfahren eignet sich zur Ausführung auf einem Client (Schritte 210 bis 240) und auf einem Server (Schritt 250).

In Schritt 210 erzeugt ein Modul in oder an einem Client Daten. Beispielsweise kann es sich bei diesen Daten um automatisch von dem Modul erzeugte Daten handeln, die bestimmte Verwendungen des Moduls widerspiegeln, etwa bestimmte verwendete Softwarefunktionen des Moduls, verbunden mit deren zeitlicher Verwendung. Alternativ kann das Erzeugen der Daten ausdrücklich durch einen Anwender des Moduls ausgelöst werden, beispielsweise durch Auswählen einer Funktion des Moduls zum Freigaben von Informationen des Anwenders oder des Moduls an einen Anbieter des Moduls, oder durch Aufrufen eines Dialogs zum Eintragen von Kommentaren.

In Schritt 220 werden die Daten mit einem Schlüssel des Clients verschlüsselt. Es kann sich um einen öffentlichen Schlüssel des Clients oder eines Anwenders handeln. Alternativ kann es sich um einen symmetrischen Schlüssel des Clients oder des Anwenders handeln. Schritt 220 ist optional; die Erfindung funktioniert auch ohne das Verschlüsseln von Daten mit einem solchen Schlüssel. Jedoch bietet dieser Schritt in Kombination mit den weiteren Schritten den besonderen Vorteil, dass sowohl Anwender als auch Anbieter die sie betreffenden Daten einsehen können, ohne dass für Anwender und Anbieter zusätzlicher Aufwand betrieben werden muss.

In Schritt 230 werden die Daten mit einem Schlüssel des Anbieters verschlüsselt. Schritt 230 kann das Nachschlagen dieses Schlüssels in einer Datenbank umfassen; in diesem Fall kann der Client einen Bezeichner des Moduls, beispielsweise dessen Namen, oder einen Bezeichner des Anbieters angeben, und erhält von der Datenbank den entsprechenden Schlüssel des Anbieters. Es handelt sich vorzugsweise um einen öffentlichen Schlüssel. Alternativ ist eine Implementierung mit einem symmetrischen Schlüssel möglich. Die in Schritt 230 verschlüsselten Daten sind identisch mit den in Schritt 220 verschlüsselten Daten; lediglich die Verschlüsselungen unterscheiden sich.

In Schritt 240 werden sowohl die in Schritt 220 als auch die in Schritt 230 verschlüsselten Daten an einen Server gesendet. Dies kann in separaten Operationen, beispielsweise als automatisch versendete Emails oder mittels separater Datenbankzugriffe erfolgen. Alternative Übermittlungsmöglichkeiten sind SMS, KNX, HTTP.

In Schritt 250 werden die übersendeten verschlüsselten Daten im Server gespeichert. Dieser Schritt kann bereits als Teil von Schritt 240 implementiert sein, etwa wenn Schritt 240 als Datenbankzugriff umgesetzt wird, der die verschlüsselten Daten direkt in einer Datenbank des Servers ablegt. Die verschlüsselten Daten werden mit einem Bezeichner des Clients beziehungsweise des Anbieters gespeichert, so dass sie unter diesem Bezeichner abgerufen werden können. Anstatt eines dem Client entsprechenden Bezeichners kann ein Name des Anwenders, beispielsweise ein Name eines Benutzerkontos, unter dem auf das Modul zum Zeitpunkt der Verschlüsselungen zugegriffen wurde, verwendet werden. Es ist ferner möglich, sowohl einen solchen Anwender-Bezeichner als auch einen Client-Bezeichner zu verwenden, um die in Schritt 220 verschlüsselten Daten im Server zu speichern. Ferner umfassen Ausführungsformen der Erfindung auch das Ablegen der in Schritt 230 verschlüsselten Daten nicht nur mit einem Anbieter-Bezeichner sondern auch mit einem Bezeichner des Anwenders und/oder Clients. Ausführungsformen mit mehreren Bezeichnern ermöglichen neben einem bequemen Zugriff für Anwender und Anbieter auf die sie betreffenden Daten auch eine Übersicht darüber, an welchen Geräten der Anwender welche Funktionen verwendet. Dies ermöglicht Anbietern eine umfassende Analyse der Verwendung ihrer Module. Gleichzeitig werden Zugriffe auf die Daten durch andere Anbieter, Clients, Anwender oder sonstige Parteien unterbunden, obwohl die Speicherung aller Daten zentral in einem Server erfolgt und dort auch die Daten anderer Anbieter, Clients, etc. gespeichert werden. Darüber hinaus ist für die Zugriff auf den Server neben den leicht zur ermittelnden Bezeichnern keinerlei Authentifizierung notwendig. Die Datensicherheit wird durch die unterschiedlichen Schlüssel gewährleistet.

Ausführungsformen der Erfindung umfassen auch elektronische Medien mit darauf gespeicherten Befehlen, die, wenn sie durch einen oder mehrere Prozessoren ausgeführt werden, eines der hier beschriebenen Verfahren durchführen.

## Patentansprüche

1. System (100), umfassend:
Einen Server (110), eine Datenbank (130) und wenigstens einen Client (120);
wobei auf der Datenbank (130) ein oder mehrere öffentliche Schlüssel (180) gespeichert sind, die mittels eines jeweiligen Bezeichners eines Anbieters eines Moduls (140) diesem Anbieter zugeordnet sind, wobei das Modul (140) in oder an dem Client (120) Daten verarbeitet;
wobei der Client (120) eingerichtet ist:
- Daten (150), die durch ein Modul (140) in oder an dem Client (120) für einen Anwender erzeugt oder erfasst werden, mit einem öffentlichen Schlüssel des Anwenders (120) als erste Daten (160) zu verschlüsseln, wobei das Modul (140) mittels eines Bezeichners dem Anbieter dieses Moduls (140) zugeordnet ist;
- auf die Datenbank (130) zuzugreifen und mittels des Bezeichners des Anbieters des Moduls (140) einen der Schlüssel der Anbieter auszulesen und die Daten (150) mit diesem Schlüssel als zweite Daten (170) zu verschlüsseln; und
- die ersten und zweiten Daten (160, 170) sowie den Bezeichner des Anbieters des Moduls und einen Bezeichner des Anwenders an den Server (110) zu senden; und
wobei der Server (110) eingerichtet ist:
- die ersten und zweiten Daten (160, 170) zu speichern, wobei die ersten Daten (160) dem Anwender des Clients (120) mittels des Bezeichners des Anwenders zugeordnet werden, und wobei die zweiten Daten (170) mittels des Bezeichners des Anbieters des Moduls (140) diesem Anbieter zugeordnet werden.

2. System (100) nach Anspruch 1, wobei der Server (110) ferner eingerichtet ist, auf eine Anforderung eines der Anbieter sämtliche Daten, die dem Anbieter zugeordnet sind, nachzuschlagen und an den Anbieter zu senden.

3. System (100) nach Anspruch 2, wobei der Client (120) ferner eingerichtet ist, neben den ersten und zweiten Daten (160, 170) eine Email-Adresse eines Anwenders des Moduls (140) zu senden, und wobei der Server (110) eingerichtet ist, die ersten und zweiten Daten (160, 170) auch unter der Email-Adresse zu speichern.

4. System (100) nach Anspruch 3, wobei der Server (110) ferner eingerichtet ist, auf eine Anforderung des Moduls (140) oder des Anwenders sämtliche erste und zweite Daten, die unter der Email-Adresse gespeichert sind, vollständig anzuzeigen oder ganz oder teilweise zu löschen.

5. System (100) nach Anspruch 4, wobei die Anforderung die Email-Adresse des Anwenders enthält.

6. System (100) nach einem der Ansprüche 1 bis 3, wobei der Server (110) ferner eingerichtet ist, auf eine Anforderung eines Moduls (140) oder Anwenders sämtliche Daten, die dem Client (120) zugeordnet sind, zu löschen.

7. System (100) nach Anspruch 6, wobei der Server (110) ferner eingerichtet ist, vor oder nach dem Speichern der ersten und zweiten Daten (160, 170) einen Bezeichner an den Client (120) zu übermitteln, und wobei die Anforderung diesen Bezeichner enthält.

8. Verfahren (200), umfassend:
Verschlüsseln (220), durch einen Client, von Daten, die durch ein Modul in oder an dem Client für einen Anwender erzeugt werden (210), mit einem öffentlichen Schlüssel des Clients als erste Daten, wobei das Modul mittels eines Bezeichners einem Anbieter des Moduls zugeordnet ist;
Zugreifen, durch den Client, auf eine Datenbank, auf der ein oder mehrere öffentliche Schlüssel gespeichert sind, und mittels des Bezeichners des Anbieters des Moduls Auslesen eines der Schlüssel der Anbieter und Verschlüsseln (230) der Daten mit dem Schlüssel als zweite Daten;
Senden (240), durch den Client, der ersten und zweiten Daten sowie des Bezeichners des Anbieters und eines Bezeichners des Anwenders an einen Server; und
Speichern (250), durch den Server, der ersten und zweiten Daten, wobei die ersten Daten dem Anwender des Clients mittels des Bezeichners des Anwenders zugeordnet werden, und wobei die zweiten Daten mittels des Bezeichners des Anbieters des Moduls diesem Anbieter zugeordnet werden.

9. Verfahren (200) nach Anspruch 8, ferner umfassend Nachschlagen, durch den Server auf eine Anforderung eines der Anbieter, sämtlicher zweiter Daten, die dem Anbieter zugeordnet sind, und Senden der zweiten Daten an den Anbieter.

10. Verfahren (200) nach Anspruch 9, wobei das Senden der ersten und zweiten Daten durch den Client ferner Senden einer Email-Adresse eines Anwenders der Softwarekomponente umfasst, und wobei das Speichern der ersten und zweiten Daten durch den Server ferner Speichern der ersten und zweiten Daten unter der Email-Adresse umfasst.

11. Verfahren (200) nach Anspruch 10, ferner umfassend Löschen, durch den Server auf eine Anforderung eines Moduls oder Anwenders, von sämtlichen ersten und zweiten Daten, die dem Client zugeordnet sind.

12. Verfahren (200) nach Anspruch 11, wobei die Anforderung die Email-Adresse des Anwenders enthält.

13. Verfahren (200) nach einem der Ansprüche 10 bis 12, ferner umfassend Löschen, durch den Server auf eine Anforderung des Moduls oder Anwenders, von sämtlichen ersten und zweiten Daten, die unter der Email-Adresse gespeichert sind.

14. Verfahren (200) nach einem der Ansprüche 8 bis 13, wobei der Server vor oder nach dem Speichern der ersten und zweiten Daten einen Bezeichner an den Client übermittelt, und wobei die zweiten Daten dem Anbieter des Moduls zugeordnet werden.

15. Computerlesbares Medium mit darauf gespeicherten Anweisungen, die bei ihrer Ausführung das Verfahren nach einem der Ansprüche 8 bis 14 durchführen.

## Claims

1. A system (100) comprising:
a server (110), a database (130) and at least one client (120);
wherein one or more public keys (180) are stored on the database (130), which are assigned to this provider by means of a respective identifier of a provider of a module (140), wherein the module (140) processes data in or at the client (120);
wherein the client (120) is configured:
- to encrypt data (150), which are generated or captured by a module (140) in or at the client (120) for a user, with a public key of the user (120) as first data (160), wherein the module (140) is assigned to the provider of this module (140) by means of an identifier;
- to access the database (130) and to read out one of the keys of the providers by means of the identifier of the provider of the module (140) and to encrypt the data (150) with this key as second data (170); and
- to send the first and second data (160, 170) as well as the identifier of the provider of the module and an identifier of the user to the server (110); and
wherein the server (110) is configured:
- to store the first and second data (160, 170), wherein the first data (160) are assigned to the user of the client (120) by means of the identifier of the user, and wherein the second data (170) are assigned to this provider by means of the identifier of the provider of the module (140).

2. The system (100) according to claim 1, wherein the server (110) is further configured, in response to a request of one of the providers, to look up all data which are assigned to the provider and to send them to the provider.

3. The system (100) according to claim 2, wherein the client (120) is further configured, in addition to the first and second data (160, 170), to send an email address of a user of the module (140), and wherein the server (110) is configured to store the first and second data (160, 170) also under the email address.

4. The system (100) according to claim 3, wherein the server (110) is further configured, in response to a request of the module (140) or of the user, to display all the first and second data which are stored under the email address completely or to delete them in whole or in part.

5. The system (100) according to claim 4, wherein the request contains the email address of the user.

6. The system (100) according to any one of claims 1 to 3, wherein the server (110) is further configured, in response to a request of a module (140) or of a user, to delete all the data which are assigned to the client (120).

7. The system (100) according to claim 6, wherein the server (110) is further configured, before or after storing the first and second data (160, 170), to transmit an identifier to the client (120), and wherein the request contains this identifier.

8. A method (200) comprising:
encrypting (220), by a client, data, which are generated (210) by a module in or at the client for a user, with a public key of the client as first data, wherein the module is assigned to a provider of the module by means of an identifier;
accessing, by the client, a database on which one or more public keys are stored, and reading out one of the keys of the providers by means of the identifier of the provider of the module and encrypting (230) the data with the key as second data;
sending (240), by the client, the first and second data as well as the identifier of the provider and an identifier of the user to a server; and
storing (250), by the server, the first and second data, wherein the first data are assigned to the user of the client by means of the identifier of the user, and wherein the second data are assigned to this provider by means of the identifier of the provider of the module.

9. The method (200) according to claim 8, further comprising looking up, by the server in response to a request of one of the providers, all the second data which are assigned to the provider and sending the second data to the provider.

10. The method (200) according to claim 9, wherein the sending of the first and second data by the client further comprises sending an email address of a user of the software component, and wherein the storing of the first and second data by the server further comprises storing the first and second data under the email address.

11. The method (200) according to claim 10, further comprising deleting, by the server in response to a request of a module or of a user, all the first and second data which are assigned to the client.

12. The method (200) according to claim 11, wherein the request contains the email address of the user.

13. The method (200) according to any one of claims 10 to 12, further comprising deleting, by the server in response to a request of the module or of the user, all the first and second data which are stored under the email address.

14. The method (200) according to any one of claims 8 to 13, wherein the server transmits an identifier to the client before or after storing the first and second data, and wherein the second data are assigned to the provider of the module.

15. A computer-readable medium having stored thereon instructions which, when executed, perform the method according to any one of claims 8 to 14.

## Revendications

1. Système (100) comprenant :
un serveur (110), une base de données (130) et au moins un client (120) ;
dans lequel une ou plusieurs clés publiques (180) sont enregistrées dans la base de données (130) et sont attribuées à un fournisseur d'un module (140) au moyen d'un identifiant respectif de ce fournisseur, le module (140) traitant des données dans ou sur le client (120) ;
le client (120) étant configuré :
- pour crypter des données (150) générées ou enregistrées par un module (140) dans ou sur le client (120) pour un utilisateur avec une clé publique de l'utilisateur (120) en tant que premières données (160), le module (140) étant attribué au fournisseur de ce module (140) au moyen d'un identifiant ;
- pour accéder à la base de données (130) et, à l'aide de l'identifiant du fournisseur du module (140), pour lire l'une des clés des fournisseurs et pour crypter les données (150) avec cette clé en tant que deuxièmes données (170) ; et
- pour envoyer les premières et deuxièmes données (160, 170) ainsi que l'identifiant du fournisseur du module et un identifiant de l'utilisateur au serveur (110) ; et
le serveur (110) étant configuré :
- pour stocker les premières et deuxièmes données (160, 170), les premières données (160) étant attribuées à l'utilisateur du client (120) au moyen de l'identifiant de l'utilisateur, et les deuxièmes données (170) étant attribuées au fournisseur du module au moyen de l'identifiant du fournisseur du module (140).

2. Système (100) selon la revendication 1, dans lequel le serveur (110) est en outre configuré pour rechercher, à la demande de l'un des fournisseurs, toutes les données attribuées au fournisseur et pour les envoyer au fournisseur.

3. Système (100) selon la revendication 2, dans lequel le client (120) est en outre configuré pour envoyer, en plus des premières et deuxièmes données (160, 170), une adresse électronique d'un utilisateur du module (140), et dans lequel le serveur (110) est configuré pour enregistrer également les premières et deuxièmes données (160, 170) sous l'adresse électronique.

4. Système (100) selon la revendication 3, dans lequel le serveur (110) est en outre configuré pour afficher intégralement ou supprimer en tout ou en partie, à la demande du module (140) ou de l'utilisateur, toutes les premières et deuxièmes données enregistrées à l'adresse électronique.

5. Système (100) selon la revendication 4, dans lequel la demande contient l'adresse électronique de l'utilisateur.

6. Système (100) selon l'une des revendications 1 à 3, le serveur (110) étant en outre configuré pour supprimer, à la demande d'un module (140) ou d'un utilisateur, toutes les données attribuées au client (120).

7. Système (100) selon la revendication 6, le serveur (110) étant en outre configuré pour transmettre, avant ou
après le stockage des premières et deuxièmes données (160, 170), un identifiant au client (120), et dans lequel la demande contient cet identifiant.

8. Procédé (200) comprenant :
le cryptage (220), par un client, de données générées par un module dans ou sur le
client pour un utilisateur (210), avec une clé publique du client en tant que premières données, le module étant attribué à un fournisseur du module au moyen d'un identifiant ;
un accès, par le client, à une base de données dans laquelle sont enregistrées une ou plusieurs clés publiques,
et la lecture, à l'aide de l'identifiant du fournisseur du module, de l'une des clés des fournisseurs et le cryptage (230) des données avec la clé en tant que deuxièmes données ;
l'envoi (240), par le client, des premières et deuxièmes données ainsi que de l'identifiant du fournisseur et d'un identifiant de l'utilisateur à un serveur ; et
l'enregistrement (250), par le serveur, des premières et deuxièmes données, les premières données étant attribuées à
l'utilisateur du client au moyen de l'identifiant de l'utilisateur, et les deuxièmes données étant attribuées au fournisseur du module au moyen de l'identifiant du fournisseur du module.

9. Procédé (200) selon la revendication 8, comprenant en outre la recherche, par le serveur et à la demande de l'un des fournisseurs, de toutes les deuxièmes données attribuées au fournisseur, et l'envoi des deuxièmes données au fournisseur.

10. Procédé (200) selon la revendication 9, dans lequel l'envoi des premières et deuxièmes données
par le client comprend en outre l'envoi d'une adresse électronique d'un utilisateur du composant logiciel, et dans lequel le stockage des premières et deuxièmes données par le serveur comprend en outre le stockage des premières et deuxièmes données sous l'adresse électronique.

11. Procédé (200) selon la revendication 10, comprenant en outre la suppression, par le serveur et à la demande d'un module ou d'un utilisateur, de toutes les premières et deuxièmes données attribuées au client.

12. Procédé (200) selon la revendication 11, dans lequel la demande contient l'adresse électronique de l'utilisateur.

13. Procédé (200) selon l'une des revendications 10 à 12, comprenant en outre la suppression, par le serveur, à la demande du module ou de l'utilisateur, de toutes les premières et deuxièmes données stockées sous l'adresse électronique.

14. Procédé (200) selon l'une des revendications 8 à 13, dans lequel le serveur, avant ou après l'enregistrement des premières et deuxièmes données, transmet un identifiant au client, et dans lequel les deuxièmes données sont attribuées au fournisseur du module.

15. Support lisible par ordinateur sur lequel sont enregistrées des instructions qui, lorsqu'elles sont exécutées, mettent en oeuvre le procédé selon l'une des revendications 8 à 14.
